# EUROPEAN PATENT SPECIFICATION

(11) **EP 1 340 205 B1**
(45) Date of publication and mention of the grant of the patent: **26.10.2005**
(21) Application number: 01999928.3
(22) Date of filing: 03.12.2001
(51) Int. Cl.: G08B 21/00

(54) **REMOTE MONITORING VIA A CONSUMER ELECTRONIC APPLIANCE**
FERNÜBERWACHUNG ÜBER EIN ELEKTRONISCHES KONSUM-HAUSHALTSGERÄT
SURVEILLANCE A DISTANCE ASSUREE PAR UN DISPOSITIF ELECTRONIQUE DOMESTIQUE

(30) Priority: 07.12.2000 US 732192
(43) Date of publication of application: 03.09.2003
(73) Proprietor: Koninklijke Philips Electronics N.V., 5621 BA Eindhoven (NL)
(72) Inventor: LORD, William, P., NL-5656 AA Eindhoven (NL); CATAN, Carolyn, R., NL-5656 AA Eindhoven (NL); MARMAROPOULOS, George, NL-5656 AA Eindhoven (NL)
(74) Representative: Groenendaal, Antonius W. M.
(86) International application number: PCT/EP2001/014270
(87) International publication number: WO 2002/047044

(56) References cited:
- GB-A- 2 296 150
- GB-A- 2 312 803
- GB-A- 2 342 801
- US-A- 5 505 199

## Description

### RELATED APPLICATIONS

Commonly-assigned copending United States Patent Application, No. 09/289,845, entitled, "CONSUMER ELECTRONIC DEVICES WITH ADAPTABLE UPGRADE CAPABILITY" filed April 12, 1999.

### FIELD OF THE INVENTION

This invention relates to systems for monitoring remotely located objects. More specifically, this invention relates to systems for monitoring remotely located objects using a consumer electronic appliance such as television receiver or a stereophonic sound reproduction system.

### BACKGROUND OF THE INVENTION

There are many systems that enable monitoring of remotely located objects, such as infants and young children. Some of these systems operate only as monitors while others of these systems enable communication between two points and permit a young child to call for assistance if in trouble.

GB-A 2 342 801 discloses a baby monitoring apparatus that receives video and audio signals from a remote monitoring unit and outputs them to a television receiver when the audio signal received from a microphone exceeds an audio threshold for a predetermined period of time. Broadcast reception on the television receiver is then interrupted with the video signal transmission from a camera. After a predetermined time period, the television receiver can return to the original broadcast.

These existing systems typically do not fit well within household usage paradigms. Specifically, most of these systems require special equipment and require careful attention and monitoring by users. Some systems do not have enough range to be used in larger homes.

Accordingly, a system for monitoring remotely located objects is needed which overcomes the deficiencies of prior art systems.

### SUMMARY OF THE INVENTION

A system for monitoring the activity of an object at a remote location includes a consumer electronic appliance having a first input for receiving data indicative of a program and a second input for receiving data indicative of the activity of the object. An activity sensor placed at the remote location senses the activity of the object and transmits data indicative of the activity to the second input of the consumer electronic appliance. The appliance displays the data from the second input at reduced size, combined with the program data if an activity threshold is met.

According to one aspect of the invention, the consumer electronic appliance may be operative to enable a user to continuously monitor the activity of the object.

According to another aspect of the invention, the consumer electronic appliance may be operative to enable the user to momentarily observe the activity of the object.

According to still another aspect of the invention, the consumer electronic appliance may include an activity detector that measures the activity of the object in the object data. The activity detector may be operative to automatically cause the consumer electronic appliance to present the activity of the object, if the measured activity meets a predetermined activity threshold.

According to a further aspect of the invention, the consumer electronic appliance may include a video display device such as a television receiver and the activity sensor may include a video camera.

According to an additional aspect of the invention, the consumer electronic appliance may include an audio reproduction device such as a stereophonic sound system and the activity sensor may include an audio pickup device.

### BRIEF DESCRIPTION OF THE DRAWINGS

The advantages, nature, and various additional features of the invention will appear more fully upon consideration of the illustrative embodiments now to be described in detail in connection with accompanying drawings wherein:
FIG. 1 is a schematic view of the system of the present invention according to an embodiment of the invention;
FIG. 2 is a block diagram of a digital television receiver that can be utilized as the video display device in the preferred embodiment of the invention;
FIG. 3 is a flowchart describing the operational process of the activity monitor and the controller in the preferred picture-in-picture (PIP) display mode; and
FIG. 4 is a schematic view of the system of the present invention according to a second embodiment of the invention.

It should be understood that the drawings are for purposes of illustrating the concepts of the invention and are not to scale.

### DETAILED DESCRIPTION OF THE INVENTION

The monitoring system of the present invention is useful for monitoring the activity of an object or objects at a remote location. The system is particularly useful for monitoring an infant or young child's activity or sleeping in another room. The system typically utilizes a consumer electronic appliance such as a digital television receiver to monitor the object(s) of interest. In the case of the television receiver, a PIP can be brought up on the command of the user for continuous monitoring of the object. The television receiver can include an activity monitor that utilizes conventional motion detection techniques to detect the object's activity and automatically bring up a PIP with the video of the object(s) when the same is active or at periodic requested intervals.

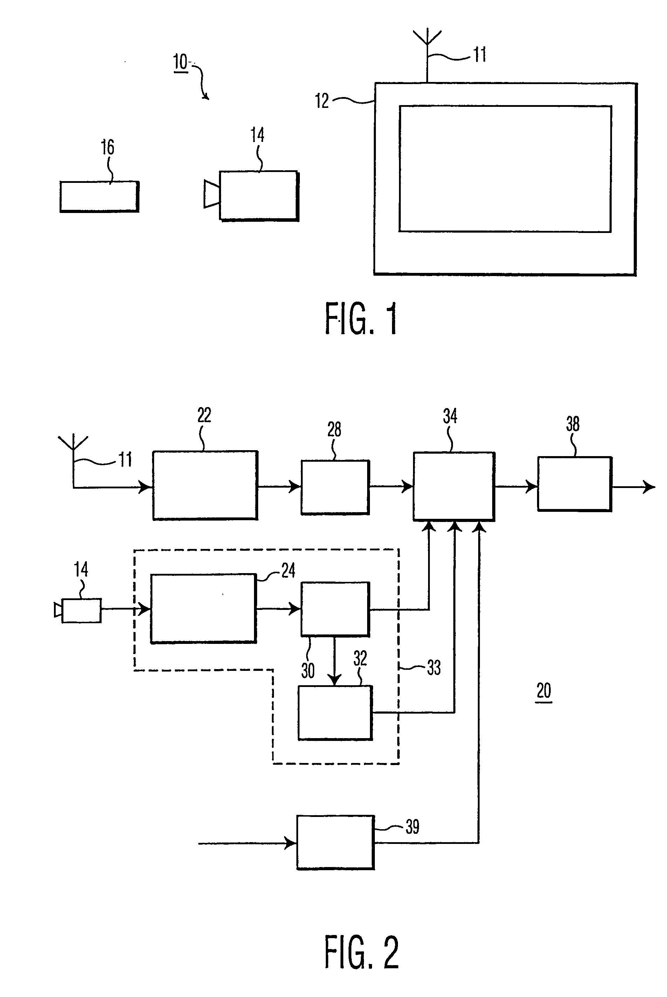

Referring now to the drawings wherein like reference numerals identify similar or like elements throughout the several views and initially to FIG. 1, a system 10 is shown in accordance with an embodiment of the present invention. The system 10 includes a consumer electronic appliance 12 for placement in a monitoring area and an activity sensor 14 for placement in an area remote from the monitoring area. The activity sensor 14 can communicate with the consumer electronic appliance using wire, wireless or network methods. Hence, the consumer electronic appliance 12 can receive data indicative of activity of an object 16 from the activity sensor 14 positioned at the remotely located monitoring area.

In a preferred embodiment, the consumer electronic appliance 12 is a video display device that is capable of receiving a digital video signal, e.g. from antenna 11 or a cable network or converting an analog video signal to a digital video signal. The video display device should also include means, such as a CPU and a memory, for processing digital video signals. A typical video display device may include a digital television receiver and more preferably a digital television receiver having a reconfigurable architecture which permits software downloading via a site provided on a computer network such as the internet, a telephone network, or a disc.

Reconfigurable architectures allow new features which may not have even existed at the design time to be added to the device. Such devices are described in International Patent Application WO 00/62163 (Attorney docket PHA 23647) entitled CONSUMER ELECTRONIC DEVICES WITH ADAPTABLE UPGRADE CAPABILITY filed on April 12, 1999, by Trovato et al. The video display device can also include a desktop, laptop, or palmtop computer; or other devices capable of displaying video.

The activity sensor 14 in the preferred embodiment is a digital or analog video camera, depending upon the video display device being used. The sensor 14 can also include any other device capable of transmitting a video image of the object 16 from a remotely located area.

FIG. 2 is a block diagram showing the primary components which enable a consumer electronic appliance such as a digital television receiver 20 to be utilized as a monitor according to the present invention.

The primary components can include first and second RF demodulators 22, 24 for separating encoded digital video and audio data respectively received from a digital television transmitter or video cassette recorder (antenna input 11) and the video camera activity sensor 14. First and second video decoders 28, 30 are provided for decoding the encoded digital video data outputted respectively from the first and second RF modulators 22, 24.

A motion based activity detector 32 inputs the decoded video data outputted from the second video decoder 30 and measures the activity of the object 16. The second RF modulator 24, the second decoder 30 and the motion detector 32 define a motion-based activity monitor 33.

A frame buffer/picture-in-picture display controller 34 stores the decoded video data inputted from the first video decoder 28 and the second video decoder 30. The controller 34 may also receive a signal from the motion detector 32 which indicates that motion has been detected in the decoded video data outputted from the second video decoder 30. The controller 34 uses this signal to determine when the PIP should be activated.

The controller 34 also enables a user to select among a plurality of different activity monitoring modes as described further on and to select a method for displaying the object's activity on the television receiver's display screen 36 in full size or preferably as a picture (PIP). The controller 34 generates the PIP object display image by combining the program originated video data and camera originated video data (inputted from the second video decoder 30) into a combined data stream.

The program originated video data typically forms the full-size portion of the display image and the camera originated video data typically forms the reduced sized portion of the display image. If the motion detector 32 detects a predetermined time threshold of object activity, i.e., motion, the motion detector 32 will cause the controller 34, if in the appropriate mode, to output a data stream indicative of the activity of the object 16 to generate a full-size picture or combine the program originated video data and camera originated video data to generate a PIP.

Still referring to FIG. 2, a video digital-to-analog converter 38 converts the digital program originated video data, camera originated video data or PIP program/object composite video data outputted from the controller 34 into a video analog signal which is used by the television receiver 20 to display the desired images on its display screen 36. A central processing unit 39 (CPU) is provided for controlling and coordinating all other components of the television receiver 20 and to provide a user interface. The operation of the CPU 39 as a user interface enables a user to activate and deactivate the PIP, for remote monitoring in one of a number of modes as will be explained further on, and to perform other functions.

The television receiver 20 can be operated by a user via the CPU 39 in four different modes. In mode one, the controller 34 outputs only the program originated video data so that the program can be shown in full size on the display screen 36 of the television receiver 20. In this mode, the activity monitor 33 can be activated or de-activated.

When operated in mode two, the second activity monitor 33 is activated and the controller 34 continuously outputs the camera originated video data so that object's activity can be continuously shown on the television receiver's display screen 36 in full size or preferably as a PIP.

When operated in mode three, the activity monitor 33 is activated and the controller 34 outputs the camera originated video data only upon the request of the user to provide an update on the status of the object's activity. The user can select to display the update on the television receiver's display screen 36 in full size or preferably as a PIP.

When operated in mode four, the activity monitor 33 is activated and the controller 34 outputs the camera originated video data only if the motion detector 32 measures a certain threshold of object activity or inactivity. The user can select to display the alert on the television receiver's display screen 36 in full size or preferably as a PIP. The threshold of object activity or inactivity can be selectively adjusted by the user.

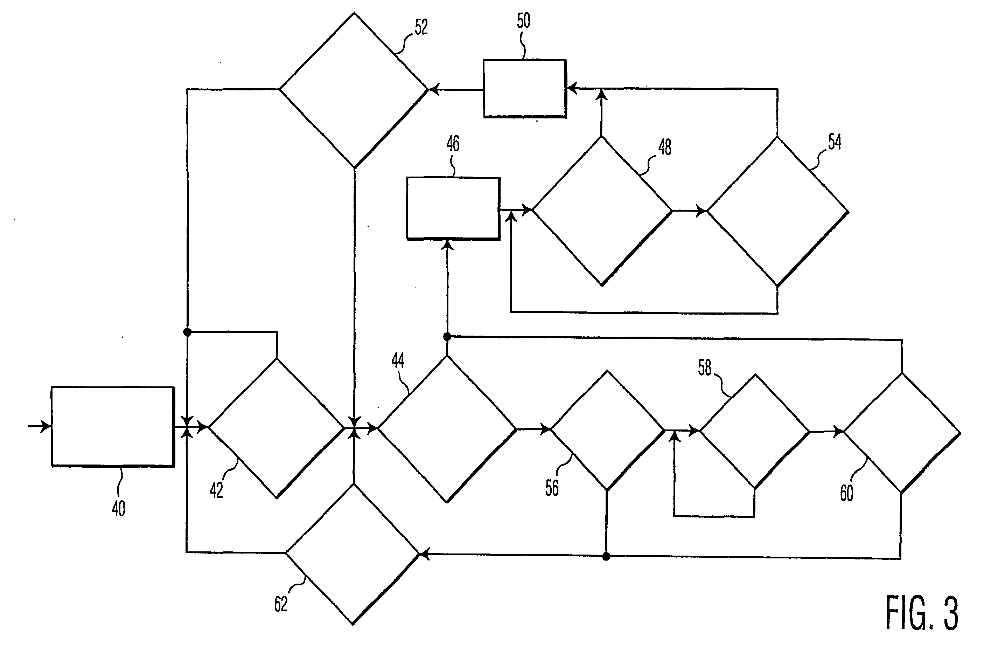

FIG. 3 is a flowchart describing the operational process of the activity monitor 33 and the controller 34 in the preferred PIP display mode. In step 40, the television receiver is tuned by a user to a desired video program which is displayed in full size on the display screen of the television receiver. In step 42 it is determined whether the activity monitor 33 has been activated by the user. If it has, then in step 44 it is determined whether the user has selected to manually monitor the object's activity (manual monitoring can be either continuous as in mode two or by command as in mode three). If manual monitoring has been selected, in step 46 the activity of the object is displayed by the television receiver as a PIP and step 48 is performed. In step 48 it is determined whether the user has turned off the PIP display of the object's activity. If it has, then in step 50 the PIP display of the object's activity is removed from the television receiver's display screen and step 52 is performed to determine whether the activity monitor 33 has been deactivated by the user. If is has, the process returns to step 42.

If in step 48, the user has not turned off the PIP display of the object's activity, then step 54 is performed to determine whether there has been a time-out of the PIP display. The time-out relates to mode three manual monitoring where the user activates the PIP to "peek" at the object momentarily. If after the PIP has been activated it will automatically turn off after a certain predetermine time period or time-out. If there has been a time-out of the PIP display, then the PIP display of the object's activity is removed from the television receiver's display screen in step 50 and the process moves on from there as described earlier. If not, then the process continues on again from step 48 as described earlier.

Returning again to step 44, if the user has not selected to manually monitor the object's activity, then step 56 is performed. In step 56 it is determined whether the object is moving. If it is not, then step 62 is performed to determine whether the activity monitor 33 has been deactivated by the user. If it has, the process returns to step 44. If it has not then the process returns to step 42.

If it is determined that the object is moving in step 56, a timer is set to a predetermined re-sampling time period and then in step 58, it determined whether the predetermined re-sampling time period is over. If the re-sampling time period is over, then step 60 is performed to determine whether the object is moving as in step 56. If it has, then the activity of the object is displayed by the television receiver as a PIP in step 46 and the process continues on from there as described above.

If motion was not detected in step 60, then step 62 is performed as described earlier. If in step 58 it is determined that the re-sampling period is not over, then step 58 is repeated and the process continues on from there as described above.

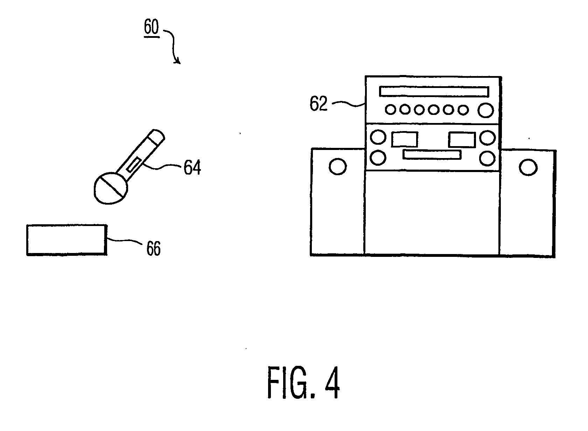

FIG. 4 is a system 60 according to a second embodiment of the present invention. The consumer electronic appliance in this system 60 is an audio reproduction device 62 such as a stereophonic sound system and preferably a stereophonic sound system with a reconfigurable architecture as described earlier. The activity monitoring sensor is an audio pickup device 64, preferably a microphone.

The stereophonic sound system includes an audio-based activity detector (not shown) that detects object activity via the sound generated by an object 66. The activity detector utilizes conventional audio detection techniques based on a sound volume and duration threshold. The audio-based activity detector works in conjunction with a controller (not shown) similar to that used in the television receiver described earlier to automatically cause the input source of the stereophonic sound system to be switched to the microphone so that the activity of the object 66 can be heard. Alternatively, the sound system may activate a chime or some other audio signal which alerts of activity.

The motion based activity detector of the television receiver and the audio based activity detector of the stereophonic sound system can be implemented using hardware and/or software. In software implementations, the software can be provided with the television receiver or stereophonic sound system or added later on as an upgrade if the television receiver or stereophonic sound system has the earlier described reconfigurable architecture.

While the foregoing invention has been described with reference to the above embodiments, various modifications and changes can be made without departing from the scope of the invention as defined in the appended claims.

## Claims

1. A consumer electronic appliance (12, 62) for monitoring the activity of an object (16) at a remote location, the appliance comprising:
a first input for receiving data indicative of a program; and
a second input for receiving data indicative of the activity of the object (16) from an activity sensor (14, 64) placed at the remote location that senses the activity of the object (16);
the appliance being operative in a first mode to enable a user to continuously monitor the activity of the object (16), **characterized by**
a controller (34) for generating a display image by combining the data from the first input at full size and the data from the second input at reduced size,
and an activity detector (32) that measures the activity of the object (16) in the object data and automatically causes the consumer electronic appliance to present the display image generated by the controller if the measured activity meets a predetermined activity threshold.

2. The consumer electronics appliance according to claim 1, wherein the consumer electronic appliance (12, 62) is operative in a second mode to enable the user to momentarily observe the activity of the object (16).

3. A system for monitoring the activity of an object (16) at a remote location, the system comprising:
the consumer electronic appliance (12, 62) as claimed in claim 1; and
an activity sensor (14, 64) to be placed at the remote location, the activity sensor for sensing the activity of the object (16) and transmitting data indicative of the activity to the second input of the consumer electronic appliance (12, 62).

4. The system according to claim 3, wherein the consumer electronic appliance includes a video display device (12) and the activity sensor includes a video camera (14).

5. The system according to claim 4, wherein the video display device (12) includes a television receiver.

6. The system according to claim 3, wherein the consumer electronic appliance includes an audio reproduction device (62) and the activity sensor includes an audio pickup device (64).

7. The system according to claim 6, wherein the audio reproduction device (62) includes a stereophonic sound system and the audio pickup device (64) includes a microphone.

## Patentansprüche

1. Konsumentenunterhaltungsgerät (12, 62) zur Überwachung der Aktivität eines Objektes (16) an einer entfernt liegenden Stelle, wobei das Gerät Folgendes umfasst:
- einen ersten Eingang zum Empfangen von Daten, die indikativ sind für ein Programm; und
- einen zweiten Eingang zum Empfangen von Daten, die indikativ sind für die Aktivität des Objektes (16), von einem Aktivitätssensor (14, 64), der sich an der entfernten Stelle befindet und die Aktivität des Objektes (16) abtastet;
wobei das Gerät in einer ersten Mode wirksam ist um einem Benutzer die Möglichkeit zu bieten, die Aktivität des Objektes (16) ständig zu überwachen, **gekennzeichnet durch**
- einen Controller (34) zum Erzeugen eines Wiedergabebildes **durch** eine Kombination der Daten des ersten Eingangs in voller Größe mit den Daten des zweiten Eingangs in reduzierter Größe, und
- einen Aktivitätsdetektor (32), der die Aktivität des Objektes (16) in den Objektdaten misst und automatisch dafür sorgt, dass das Konsumentenunterhaltungsgerät das von dem Controller erzeugte Wiedergabebild präsentiert, wenn die gemessene Aktivität einer vorbestimmten Aktivitätsschwelle entspricht.

2. Konsumentenunterhaltungsgerät nach Anspruch 1, wobei das Gerät (12, 62) in einer zweiten Mode wirksam ist um dem Benutzer die Möglichkeit zu bieten, augenblicklich die Aktivität des Objektes (16) zu beobachten.

3. System zur Überwachung der Aktivität eines Objektes (16) an einer entfernten Stelle, wobei das System Folgendes umfasst:
- das Konsumentenunterhaltungsgerät (12, 62) nach Anspruch 1; und
- einen Aktivitätssensor (14, 64), der an der entfernten Stelle vorgesehen werden soll, wobei der Aktivitätssensor die Aktivität des Objektes (16) abtastet und Daten überträgt, die indikativ sind für die Aktivität, zu dem zweiten Eingang des Konsumentenunterhaltungsgeräts (12, 62).

4. System nach Anspruch 3, wobei das Konsumentenunterhaltungsgerät eine Videowiedergabeanordnung (12) aufweist und der Aktivitätssensor eine Videokamera (14) enthält.

5. System nach Anspruch 4, wobei die Videowiedergabeanordnung (12) einen Fernsehempfänger enthält.

6. System nach Anspruch 3, wobei das Konsumentenunterhaltungsgerät eine Tonwiedergabeanordnung (62) aufweist und der Aktivitätssensor eine Tonaufnahmeanordnung (64) aufweist.

7. System nach Anspruch 6, wobei die Tonwiedergabeanordnung (62) ein Stereo-Tonsystem aufweist und die Tonaufnahmeanordnung (64) ein Mikrophon aufweist.

## Revendications

1. Appareil électronique grand public (12, 62) destiné à surveiller l'activité d'un sujet (16) en un endroit distant, l'appareil comprenant :
une première entrée destinée à recevoir des données donnant des indications sur un programme, et
une seconde entrée destinée à recevoir des données donnant des indications sur l'activité du sujet (16), provenant d'un capteur d'activité (14, 64) placé à l'endroit distant, lequel détecte l'activité du sujet (16),
l'appareil pouvant fonctionner dans un premier mode afin de permettre à un utilisateur de surveiller de manière continue l'activité du sujet (16),
**caractérisé par**
un contrôleur (34) destiné à générer une image d'affichage en combinant les données provenant de la première entrée de pleine grandeur et les données provenant de la seconde entrée de taille réduite, et par
un détecteur d'activité (32) qui mesure l'activité du sujet (16) dans les données de sujet, et amène automatiquement l'appareil électronique grand public à présenter l'image d'affichage générée par le contrôleur si l'activité mesurée atteint un seuil d'activité prédéterminé.

2. Appareil électronique grand public suivant la revendication 1, dans lequel l'appareil électronique grand public (12, 62) peut fonctionner dans un deuxième mode afin de permettre à l'utilisateur d'observer momentanément l'activité du sujet (16).

3. Système destiné à surveiller l'activité d'un sujet (16) en un endroit distant, le système comprenant :
l'appareil électronique grand public (12, 62) suivant la revendication 1, et
un capteur d'activité (14,64) à placer à l'endroit situé à distance, le capteur d'activité étant destiné à détecter l'activité du sujet (16) et à transmettre des données donnant des indications sur l'activité de la seconde entrée de l'appareil électronique grand public (12, 62).

4. Système suivant la revendication 3, dans lequel l'appareil électronique grand public comprend un dispositif d'affichage vidéo (12) et le capteur d'activité comprend une caméra de télévision (14).

5. Système suivant l'invention 4, dans lequel le dispositif d'affichage vidéo (12) comprend un téléviseur.

6. Système suivant la revendication 3, dans lequel l'appareil électronique grand public comprend un dispositif de reproduction audio (62) et le capteur d'activité comprend un dispositif capteur audio (64).

7. Système suivant la revendication 6, dans lequel le dispositif de reproduction audio (62) comprend un système acoustique stéréophonique et le dispositif capteur audio (64) comprend un microphone.
